# EUROPEAN PATENT SPECIFICATION

(11) **EP 2 404 791 B1**
(45) Date of publication and mention of the grant of the patent: **30.05.2018**
(21) Application number: 10748608.6
(22) Date of filing: 12.02.2010
(51) Int. Cl.: B60R 25/10, B60R 25/04, B62H 5/20, G08B 13/00, G08B 25/10, B60R 25/40, B60R 25/102

(54) **ABNORMALITY DETECTION AND VEHICLE TRACKING DEVICE**
FESTSTELLUNG VON ABNORMALITÄTEN UND FAHRZEUGORTUNGSVORRICHTUNG
DISPOSITIF DE DÉTECTION D'ANOMALIES ET DE SUIVI DE VÉHICULE

(30) Priority: 06.03.2009 JP 2009054210
(43) Date of publication of application: 11.01.2012
(73) Proprietor: Honda Motor Co., Ltd., Minato-ku Tokyo 107-8556 (JP)
(72) Inventor: KONNO Takeshi, Wako-shi Saitama 351-0193 (JP); HIRAKATA Yoshiaki, Wako-shi Saitama 351-0193 (JP)
(74) Representative: Fioravanti, Corrado
(86) International application number: PCT/JP2010/052062
(87) International publication number: WO 2010/101012

(56) References cited:
- EP-A2- 1 170 181
- JP-A- 9 223 278
- JP-A- H08 147 003
- JP-A- 2001 236 597
- JP-A- 2003 237 538
- KR-A- 20070 020 666

## Description

### Technical Field

The present invention relates to an abnormality sensing and vehicle tracking apparatus, and particularly to an abnormality sensing and vehicle tracking apparatus that sets off an alarm when sensing an abnormality such as removing a battery while a driver or rider is away from a vehicle.

### Background Art

Conventionally, an abnormality sensing apparatus that senses external force applied to a parked vehicle body to set off an alarm or disable engine starting has been known.

In Patent literature 1, there is disclosed an abnormality sensing apparatus which is provided with a sensor composed of a first antenna and a second antenna for sensing vibrations applied to a vehicle, the abnormality sensing apparatus giving an alarm with a horn or lamps of the vehicle when sensing illegal transportation of the vehicle by third parties while a driver is away from the vehicle. Further prior art is known from Patent literature 2.

### [Citation List]

### [Patent Literature]

[Patent Literature 1] Japanese Unexamined Patent Application Publication No. 2005-329733
[Patent Literature 2] JPH09-223 278 A

### Summary of Invention

### Technical Problem

The abnormality sensing apparatus described in Patent literature 1 is not equipped with an internal power supply for enabling its warning means to be activated even in a state in which its in-vehicle battery is removed. Therefore, the abnormality sensing apparatus is incapable of setting off an alarm when the battery is removed. In a case where an internal power supply is provided in its system in order to respond to that disadvantage, the abnormality sensing apparatus is made capable of setting off an alarm when the battery is removed by third parties. Meanwhile, after the battery is once connected to a vehicle for a factory completion inspection and a system action inspection is carried out, when the battery is removed, an alarm is activated, and additionally, the internal power supply is consumed.

An object of the present invention is to solve the problems in the above-described conventional technology, and to provide an abnormality sensing and vehicle tracking apparatus which is capable of activating an alarm even when its battery is removed by third parties, and in which the battery can be removed from a vehicle without setting off an alarm during a period from a factory inspection up to a delivery to a user at a sales shop by switching operational modes, and it is possible to reduce consumption of its internal power supply in a state in which its in-vehicle battery is unconnected.

### Solution to Problem

To achieve the above objects, the present invention has a first feature in that an abnormality sensing and vehicle tracking apparatus which senses an abnormal state of the vehicle with abnormality sensing means including a sensor sensing vibrations or the like applied to a vehicle, and which has a vehicle tracking function, the apparatus comprising: an internal power supply which is capable of supplying driving electrical power to the abnormality sensing and vehicle tracking apparatus in place of an in-vehicle battery when the in-vehicle battery is unconnected to the vehicle; and operational mode switching means for switching a plurality of operational modes provided to the abnormality sensing and vehicle tracking apparatus, wherein the plurality of operational modes include a first operational mode (normal mode) in which the abnormality sensing and vehicle tracking apparatus is activated by use of the internal power supply, and a second operational mode (transportation mode) in which the internal power supply is prohibited from being used when the in-vehicle battery is removed.

The present invention has a second feature in that among the plurality of operational modes, the second operational mode is set in an initial state before the in-vehicle battery is first connected to the vehicle, and the second operational mode is allowed to be switched to the first operational mode when the in-vehicle battery is connected to the vehicle.

The present invention has a third feature in that among the plurality of when the in-vehicle battery is connected to the vehicle and a predetermined operational mode switching operation is executed in the second operational mode as an operational mode among the plurality of operational modes, the operational mode is shifted to a third operational mode (inspection mode) in which an inspection for the abnormality sensing and vehicle tracking apparatus is possible.

The present invention has a fourth feature in that an operational mode switching operation from the second operational mode to the first operational mode is composed of a combination of an operation of an ignition switch that switches on and off a main power supply of the vehicle and a connecting operation of a check coupler.

The present invention has a fifth feature in that the predetermined operational mode switching operation switches on the ignition switch that switches on and off the main power supply of the vehicle.

The present invention has a sixth feature in that when the ignition switch is switched off and the in-vehicle battery is brought into an unconnected state in the third operational mode (inspection mode), the operational mode switching means shifts the operational mode to the second operational mode (transportation mode).

### Advantageous Effects of Invention

According to the first feature, an abnormality sensing and vehicle tracking apparatus which senses an abnormal state of the vehicle with abnormality sensing means including a sensor sensing vibrations or the like applied to a vehicle, and which has a vehicle tracking function, the apparatus comprising: an internal power supply which is capable of supplying driving electrical power to the abnormality sensing and vehicle tracking apparatus in place of an in-vehicle battery when the in-vehicle battery is unconnected to the vehicle; and operational mode switching means for switching a plurality of operational modes provided to the abnormality sensing and vehicle tracking apparatus, wherein the plurality of operational modes include a first operational mode (normal mode) in which the abnormality sensing and vehicle tracking apparatus is activated by use of the internal power supply, and a second operational mode (transportation mode) in which the internal power supply is prohibited from being used when the in-vehicle battery is removed. Therefore, not only is it possible to sense that the battery is removed to sense an abnormality by selecting the operational modes, but also it is possible to remove the battery after carrying out an inspection for the system in a factory, so as to reduce consumption of the power supply. Thereby, provided that the transportation mode is set before factory shipment, it is possible to prevent the internal power supply from being consumed during a period until the in-vehicle battery is connected to the vehicle after shipment. Further, it is possible to prevent the abnormality sensing and vehicle tracking apparatus from being activated during transportation from a factory to a sales shop or the like.

According to the second feature, among the plurality of operational modes, the second operational mode is set in an initial state before the in-vehicle battery is first connected to the vehicle, and the second operational mode is allowed to be switched to the first operational mode when the in-vehicle battery is connected to the vehicle. Therefore, an operation of setting to the second operational mode is unneeded, and in addition, it is possible to switch from the second operational mode (transportation mode) suitable for transportation from a factory to a sales shop or the like to the first operational mode (normal mode) in which the abnormality sensing function is enabled by performing a predetermined operational mode switching operation in a sales shop or the like. Thereby, it is possible to securely prevent consumption of the internal power supply.

According to the third feature, among the plurality of when the in-vehicle battery is connected to the vehicle and a predetermined operational mode switching operation is executed in the second operational mode as an operational mode among the plurality of operational modes, the operational mode is shifted to a third operational mode (inspection mode) in which an inspection for the abnormality sensing and vehicle tracking apparatus is possible. Therefore, it is possible to execute an inspection for the abnormality sensing and vehicle tracking apparatus in a factory or the like.

According to the fourth feature, an operational mode switching operation from the second operational mode to the first operational mode is composed of a combination of an operation of an ignition switch that switches on and off a main power supply of the vehicle and a connecting operation of a check coupler. Therefore, the procedure for the operational mode switching operation is complicated such that "the ignition switch is switched on after the check coupler is connected, and next, the check coupler is uncoupled," so as to be able to make it difficult for a third person who does not know the proper procedure to perform the operational mode switching operation.

According to the fifth feature, the predetermined operational mode switching operation switches on the ignition switch that switches on and off the main power supply of the vehicle. Therefore, it is possible to carry out an inspection for the abnormality sensing and vehicle tracking apparatus by arbitrarily switching from the second operational mode (transportation mode) to the third operational mode (inspection mode) before shipment from a factory.

According to the sixth feature, when the ignition switch is switched off and the in-vehicle battery is brought into an unconnected state in the third operational mode (inspection mode), the operational mode switching means shifts the operational mode to the second operational mode (transportation mode). Therefore, when an inspection for the abnormality sensing and vehicle tracking apparatus is terminated, it is possible to return the operational mode to the mode suitable for transportation again.

### Brief Description of Drawings

[Fig. 1] Fig. 1 is a schematic diagram showing a communication system of an abnormality sensing apparatus (which will be hereinafter shown as an abnormality sensing and vehicle tracking apparatus) according one embodiment of the present invention.
[Fig. 2] Fig. 2 is a block diagram showing the configuration of the abnormality sensing apparatus according to the present embodiment and peripheral devices thereof.
[Fig. 3] Fig. 3 is a time chart showing a flow at the time of conducting failure diagnosis processing for the abnormality sensing apparatus by use of the telephone set.
[Fig. 4] Fig. 4 is a circuit diagram of the abnormality sensing apparatus according to the present embodiment and peripheral devices thereof.
[Fig. 5] Fig. 5 is a time chart showing a flow of a failure diagnosis in a case where the check coupler is used.
[Fig. 6] Fig. 6 is a block diagram showing the configuration of operational mode switching means.
[Fig. 7] Fig. 7 is a state transition diagram showing the configuration of operational mode switching control.
[Fig. 8] Fig. 8 is a flow chart showing the procedure for shifting from the transportation mode M1 to the normal mode M4.
[Fig. 9] Fig. 9 is a time chart showing the procedure for shifting from the transportation mode M1 to the normal mode M4.

### Description of Embodiments

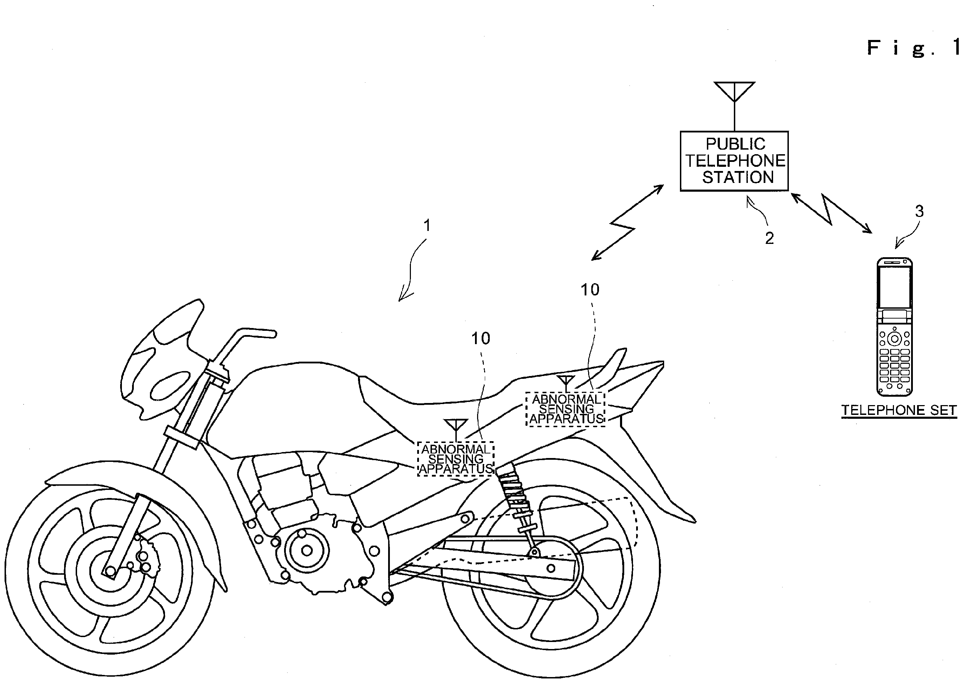

A preferred embodiment of the present invention will be described below in detail with reference to the drawings. Fig. 1 is a schematic diagram showing a communication system of an abnormality sensing and vehicle tracking apparatus (which will be hereinafter shown as an abnormality sensing apparatus) according one embodiment of the present invention. An abnormality sensing apparatus 10 that senses an abnormal state of a vehicle to give a warning is installed on a motorcycle 1. The abnormality sensing apparatus 10 is configured to determine that the vehicle is in an abnormal state when a signal over a predetermined value is output from an acceleration sensor or the like installed on the vehicle body while the vehicle is parked, to give a warning by activating a horn, lamps, or the like of the vehicle.

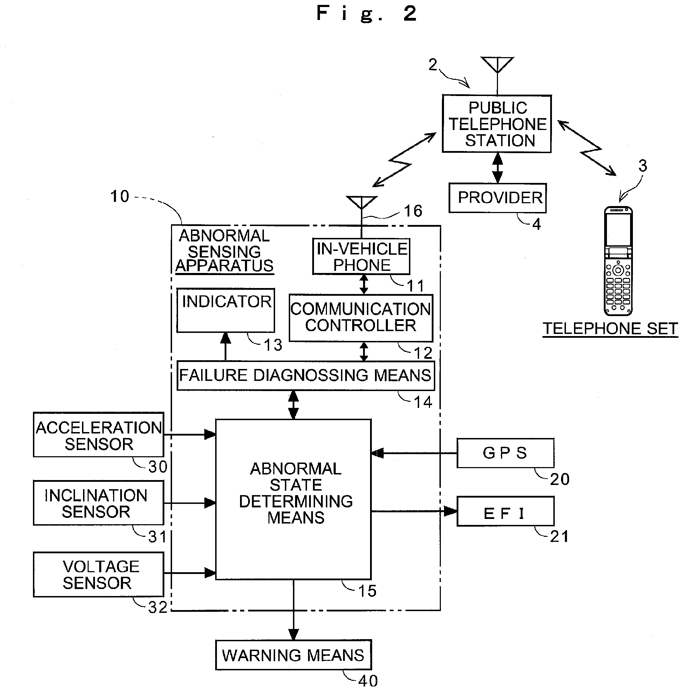

The abnormality sensing apparatus 10 is equipped with an in-vehicle transceiver such as a telephone set (refer to Fig. 2) capable of performing communication with a public telephone station 2. Therefore, it is possible to make a telephone call from the telephone set 3 to the abnormality sensing apparatus 10 via the public telephone station 2. The telephone set 3 may be a mobile telephone or a fixed-line telephone capable of accessing the public telephone station 2. In the present embodiment, GSM (Global System for Mobile Communications) that is the standard for mobile telephones is applied as the communication standard for an in-vehicle telephone set 11 on the abnormality sensing apparatus 10, and therefore, it is possible to make a telephone call to the abnormality sensing apparatus 10 from the telephone set 3 in many countries operating GSM.

Fig. 2 is a block diagram showing the configuration of the abnormality sensing apparatus 10 according to the present embodiment and peripheral devices thereof. The abnormality sensing apparatus 10 is covered with a three dimensional resin case, for example, size of approximately 100 mm x 100 mm x 20 mm, and that is a control device without operating means such as any switches. The abnormality sensing apparatus 10 is disposed at a position to which it is not easy for a third person to access, for example, under a seat of a motorcycle, or under a fuel tank. The abnormality sensing apparatus 10 includes an in-vehicle telephone set 11 equipped with a transmitting and receiving antenna 16 for performing communication with the public telephone station 2, a communication control unit 12 that performs at least an analysis of a transmitting and receiving signal by the in-vehicle telephone set 11, failure diagnosing means 14 that diagnoses the presence or absence of a failure in the abnormality sensing apparatus 10, indicating means 13 that indicates at least a diagnosis result which is yielded by the failure diagnosing means 14, and abnormal state determining means 15 that determines an abnormal state of the vehicle on the basis of output signals from the sensors 30, 31 and 32. The in-vehicle telephone set 11 may be provided outside the abnormality sensing apparatus 10. Further, the communication control unit 12 may be set so as to deny access from telephones other than a predetermined telephone set registered therewith in advance.

In order to perform wireless communication by the in-vehicle telephone set 11, it is necessary for an owner of the vehicle to conclude a communications contract with a network service provider 4. It is possible for the owner of the vehicle to arbitrarily choose whether or not to conclude a communications contract with the provider 4. The abnormality sensing apparatus 10 can be used as a typical abnormality sensing apparatus that activates warning means 40 on the basis of vibrations or the like caused by force applied externally to the vehicle body even in a case where a user has not concluded a communications contract with the provider 4. Hereinafter, cases where communications through the in-vehicle telephone set 11 are performed will be described as cases where a communications contract with the provider 4 is concluded.

Output signals from the acceleration sensor 30 that senses vibrations or the like applied to the vehicle body, an inclination sensor 31 that senses an angle of inclination to the front and back, and the right and left of the vehicle body, and a voltage sensor 32 that detects a change in battery voltage for monitoring access to a power supply circuit for example are input to the abnormal state determining means 15. The abnormal state determining means 15 determines that the vehicle is in an abnormal state, for example, when at least one of the output signals from the sensors 30, 31 and 32 exceeds a predetermined value. The abnormality sensing apparatus 10 is configured to be able to transmit that an abnormal state is sensed to the telephone set 3 remotely located from the vehicle via the in-vehicle telephone set 11. At this time, a clock time at which the abnormal state is sensed and a type of the activated sensor, and the like can be indicated on a display serving as indicating means of the telephone set 3.

A GPS (Global Positioning System) 20 is connected to the abnormal state determining means 15. The GPS 20 is used for the operation of an in-vehicle navigation system during typical driving of the vehicle. Meanwhile, the GPS 20 connected to the abnormality sensing apparatus 10 according to the present embodiment is configured to be able to be utilized, in case of occurrence of an abnormality, for a vehicle tracking function of transmitting an actual location of the vehicle, a travel history from a time of occurrence of an abnormality, or the like to the telephone set 3 via the in-vehicle telephone set 11.

An EFI (electronically-controlled fuel injector) 21 as an engine controller to be connected to the abnormal state determining means 15 is configured to be able to stop its driving when the abnormal state is detected according to an instruction from the abnormal state determining means 15. Therefore, it is possible to automatically stop the EFI 21 to disable the vehicle to be driven in case of occurrence of an abnormality. The stopping of the EFI 21 may be arbitrarily carried out by an operation of the telephone set 3. The engine controller controlled according to an instruction from the abnormal state determining means 15 may be an ignition system for spark plugs, various types of actuators, or the like.

The abnormality sensing apparatus 10 according to the present embodiment diagnoses whether or not the abnormality sensing apparatus 10 is normally functioning by the failure diagnosing means 14. That is, it is possible to conduct a self failure diagnosis for the abnormality sensing apparatus 10. The failure diagnosing means 14 is capable of sensing a state where it is impossible for the abnormal state determining means 15 having trouble to determine its abnormality even when all the sensors output signals over the predetermined value. Moreover, the failure diagnosing means 14 is capable of diagnosing a state in which output signals from all the sensors are not normally input, failures in the sensors themselves, and the like. The failure diagnosing means 14 is set to indicate type of a failure, a coping strategy, and the like on the indicating means 13 when such a failure is sensed.

In accordance with the configuration as described above, it is possible for a maintenance person for the vehicle to make a telephone call from the telephone set 3 to the abnormality sensing apparatus 10 to conduct a failure diagnosis for the abnormality sensing apparatus 10, and to know a diagnosis result thereof on the indicating means 13. A light-emitting diode (LED), a liquid-crystal screen, or the like may be applied to the indicating means 13.

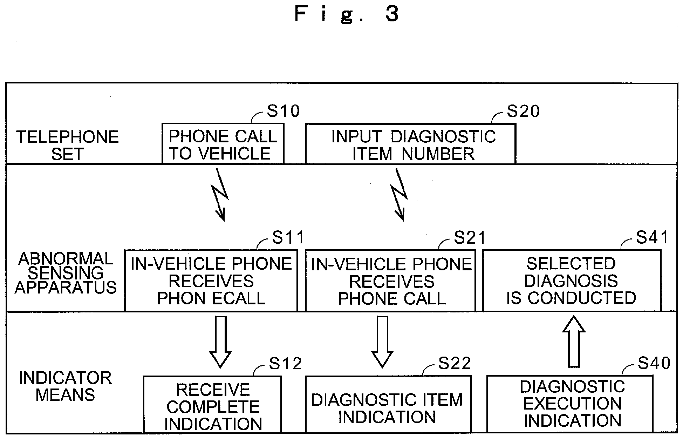

Fig. 3 is a time chart showing a flow at the time of conducting self failure diagnosis processing for the abnormality sensing apparatus 10 by use of the telephone set 3. When a maintenance person for the vehicle makes a telephone call from the telephone set 3 to the abnormality sensing apparatus 10 in step S10, the in-vehicle telephone set 11 of the abnormality sensing apparatus 10 receives the telephone call in step S11. In the following step S12, completion of the reception is indicated on the indicating means 13. Thereby, it is possible for the maintenance person for the vehicle to check visually that the telephone line is connected. The procedure for making a telephone call to the abnormality sensing apparatus 10 in the aforementioned step S10 can be carried out by dialing a telephone number unique to the in-vehicle telephone set 11 from a fixed-line telephone, a mobile telephone, or the like.

Next, in step S20, a number representing each diagnostic item (for example, numerals 1 to 5) is input to the telephone set 3. The diagnostic items may be composed of contents such as whether there is not a short-circuit in the circuit composing the abnormality sensing apparatus 10, and whether or not the sensors 30, 31 and 32 are normally functioning. In the following step S21, the in-vehicle telephone set 11 receives the input diagnostic item, and in step S22, the diagnostic item input to the indicating means 13 is indicated. Then, in step S40, it is indicated on the indicating means 13 that a failure diagnosis is conducted. In step S41, a failure diagnosis instruction signal for starting a failure diagnosis is output from the communication control unit 12, and a failure diagnosis for the selected diagnostic item is conducted by the failure diagnosing means 14.

As described above, in accordance with the abnormality sensing apparatus 10 according to the present embodiment, it is possible to conduct a failure diagnosis for the abnormality sensing apparatus 10 by an operation of the telephone set 3. Typically, when a self-diagnosis function is provided to the abnormality sensing apparatus 10 so as not to require a dedicated device for conducting a failure diagnosis, input means such as a switch for switching from a state in a typical abnormality sensing mode to a failure diagnosis mode in which the function of the abnormality sensing apparatus is temporarily suspended is required. Contrary to this, in accordance with the abnormality sensing apparatus 10 according to the present embodiment, because there is no need to provide input means which may be operated by a third person, it is possible to conduct a failure diagnosis for the abnormality sensing apparatus in a simple method, and to maintain a high abnormality sensing effect of the abnormality sensing apparatus.

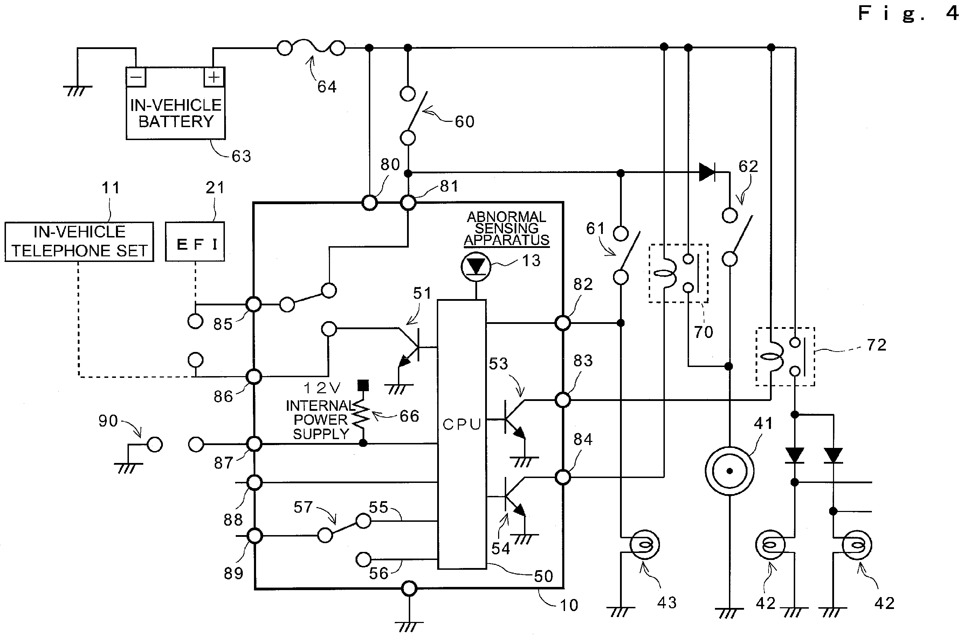

Fig. 4 is a circuit diagram of the abnormality sensing apparatus according to the present embodiment and peripheral devices thereof. The same reference numerals as those in the above description denote identical or equivalent portions. This circuit diagram mainly shows a relationship of connection between the abnormality sensing apparatus 10 and the warning means 40 (a horn and blinkers which will be described later). A CPU 50 serving as a central processing unit of the abnormality sensing apparatus 10 includes abnormality determining means and failure diagnosing means as shown in Fig. 2. An LED (light-emitting diode) to be connected to the CPU 50 serves as the indicating means 13.

An internal power supply 66 is connected to the CPU 50. The internal power supply 66 is provided in order to activate the sensors to drive the warning means 40 on the basis of output signals from the sensors, or to enable communication with the in-vehicle telephone set 11 even when an in-vehicle battery 63 is removed. The CPU 50 is driven by electrical power of the in-vehicle battery 63 when the in-vehicle battery 63 is connected to the vehicle, and the internal power supply 66 is in an unused state. During this normal time, the internal power supply 66 is fully-charged by electrical power supplied from the in-vehicle battery 63, and is set so as to be switched into a state to use only when the in-vehicle battery 63 is removed.

A plurality of input and output ports are provided in the abnormality sensing apparatus 10. Electrical power of the in-vehicle battery 63 is supplied from an input port 80 via a main fuse 64. Input ports 81 and 82 are used for monitoring operating states of an ignition switch 60 that disconnects and connects the main power supply of the vehicle and a stop lamp switch 61 that turns on a stop lamp 43.

A horn 41 activated according to an operation of a horn switch 62 and blinker lights 42 blinking according to an operation of a blinker switch (now shown) are provided on the motorcycle 1. The horn 41 and the blinker lights 42 are not activated even by operating the respective switches unless the ignition switch 60 is in an on-state. However, when an abnormal state is sensed while the vehicle is parked, the CPU 50 switches transistors 53 and 54 on, to drive relays 70 and 72 via output ports 83 and 84, so as to activate the horn 41 and the blinker lights 42 as the warning means 40.

Further, when an abnormal state of the vehicle is sensed, the CPU 50 is capable of driving a transistor 51 connected to an input and output port 85 to stop the EFI 21. Moreover, it is possible to transmit the abnormal state of the vehicle to a predetermined telephone set by use of the in-vehicle telephone set 11 connected to an input and output port 86.

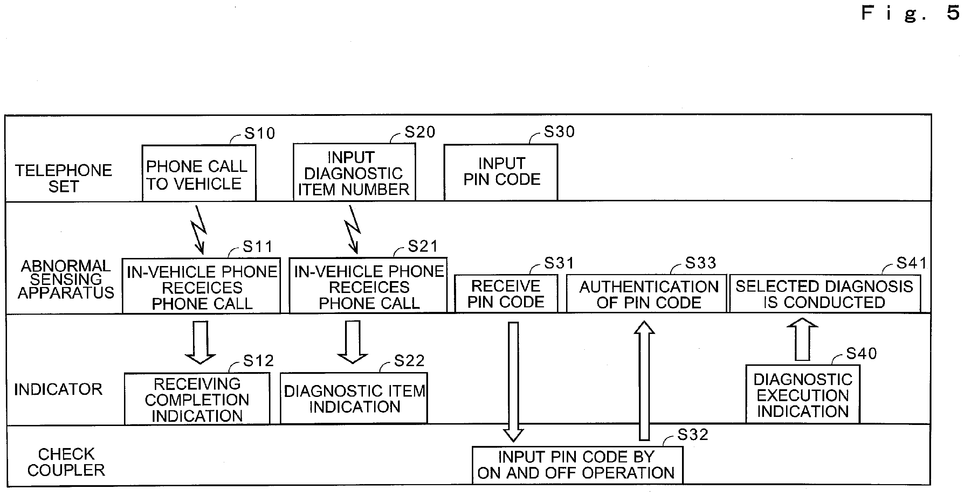

The abnormal sensor 10 according to the present embodiment is configured to use a check coupler 90 connected thereto via an input port 87 at the time of conducting a failure diagnosis by making a telephone call from the telephone set 3 to the in-vehicle telephone set 11. The check coupler 90 is a small device composed of a male coupler which has a switch, and the apparatus is configured such that it is possible to input an input signal of the switch to the CPU 50 when the male coupler is connected to a female coupler connected to the input port 87. A flow of a case where a failure diagnosis is conducted by use of the check coupler 90 will be described with reference to Fig. 5.

Fig. 5 is a time chart showing a flow of a failure diagnosis in a case where the aforementioned check coupler 90 is used. The same reference numerals as those in the above description denote identical or equivalent portions. In this modified example, there is a feature in the point that a PIN code input from the telephone set 3 and a PIN (person identification number) code input from the check coupler 90 are cross-checked to execute authentication processing for preventing access by a third person. This time chart is set such that a series of authentication processings are performed between the step 22 (diagnostic item indication) shown in Fig. 3 and the step S40 (diagnosis execution indication).

A PIN code is input to the telephone set 3 in step S30, and the in-vehicle telephone set 11 receives the input PIN code in step S31. In the following step S32, a PIN code is input by operations of turning on and off the check coupler 90. Then, in step S33, the PIN code is authenticated by the abnormality sensing apparatus 10. This authentication processing is executed in the communication control unit 12 (refer to Fig. 2) of the abnormality sensing apparatus 10.

When the authentication processing in step S33 is normally completed, it is indicated on the indicating means 13 that a failure diagnosis is conducted in step S40, and a failure diagnosis for a selected diagnostic item is conducted in step S41. That is, in the present embodiment, when a PIN code input from the telephone set 3 and a PIN code input from the check coupler 90 are different from each other, a failure diagnosis for the abnormality sensing apparatus is not conducted to prevent a third person from conducting a failure diagnosis. In addition, various modifications of types of PIN codes, a mode of the check coupler, and the like are possible. For example, it is possible to input a PIN code by an action of switching a connecting state of the check coupler without a switch or the like.

Returning to Fig. 4, output ports 88 and 89 provided in the abnormality sensing apparatus 10 are provided for connection with various types of in-vehicle devices. A serial line 55 and a K-line 56 connected to the CPU 50 can be arbitrarily switched between their connection states with the output port 89 by a jumper selector 57. The serial line 55 and the K-line 56 are communication standards used for failure diagnoses or the like for various types of in-vehicle devices, and after an in-vehicle device is connected to the output port 89, it is possible to conduct a failure diagnosis thereof by making a telephone call from the telephone set 3 to the abnormality sensing apparatus 10. In addition, the aforementioned EFI 21 as well is connected to the CPU 50 by use of the K-line 56 to be capable of conducting a failure diagnosis thereof. Further, types and numbers of input and output ports provided in the abnormality sensing apparatus 10 are not limited to the above-described embodiment, and various modifications thereof are possible.

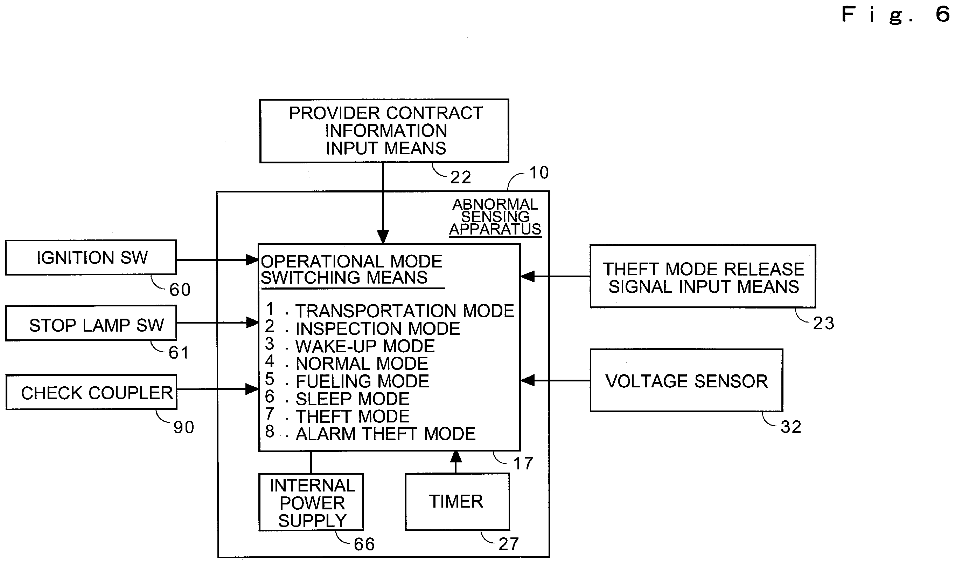

Fig. 6 is a block diagram showing the configuration of operational mode switching means 17 in the abnormality sensing apparatus 10. The operational mode switching means 17 is provided inside the aforementioned CPU 50. All the eight types of operational modes are provided in the abnormality sensing apparatus 10, and the operational mode switching means 17 is configured to be capable of switching between the operational modes on the basis of input information from the switches,the input means and the sensor, or the like. The eight types of operational modes shown below are provided.
1. Transportation mode (The second operational mode. The case in transportation from a factory to a sales shop is envisioned. The internal power supply is prohibited from being used to reduce the consumption of electrical power during a period until an in-vehicle battery is connected to the vehicle.)
2. Inspection mode (The third operational mode. A case in inspection for the abnormality sensing apparatus is envisioned.)
3. Wake-up mode (An operation of switching to a normal mode is received.)
4. Normal mode (The first operational mode. A case in normal use such as driving is envisioned. The warning means is not activated even when external force causing vibrations or the like applied to the vehicle body are sensed.)
5. Fueling mode (A case in fueling by a user (where the ignition switch SW is switched off) is envisioned. The warning means is not activated even when external force causing vibrations or the like applied to the vehicle body are sensed.)
6. Sleep mode (A case in typical off-vehicle where the ignition switch SW is switched off is envisioned. The warning means is activated when external force causing vibrations or the like applied to the vehicle body are sensed.)
7. Theft mode (A state such as the vehicle is moved with an ignition key inserted by the third person is moved or the like is envisioned. A user uses a telephone set to cause the abnormality sensing apparatus to recognize that the vehicle is in an abnormal state, to activate the warning means.)
8. Alarm theft mode (A state in which an abnormality occurs in a state in which an ignition key is pulled out is envisioned. The warning means is activated and notice is given for example to a telephone set of a user.)

Further, signals from provider contract information input means 22 that inputs information on whether or not a communications contract is concluded with the provider 4, the ignition SW (switch) 60 that switches on and off the main power supply of the vehicle, the stop lamp SW (switch) 61 that senses operations of a brake lever and a brake pedal, the aforementioned check coupler 90, theft mode release signal input means 23 that inputs a theft mode release signal transmitted from a user or the like, a voltage sensor 32 that always monitors a voltage of the in-vehicle battery 63, and a timer 27 that clocks various types of predetermined times are input to the operational mode switching means 17. In addition, the abnormality sensing apparatus 10 has the internal power supply 66 and the voltage sensor 32, so that the abnormality sensing apparatus 10 is capable of setting off an alarm even when the in-vehicle battery 63 is removed in order to suspend the function of the abnormality sensing apparatus 10.

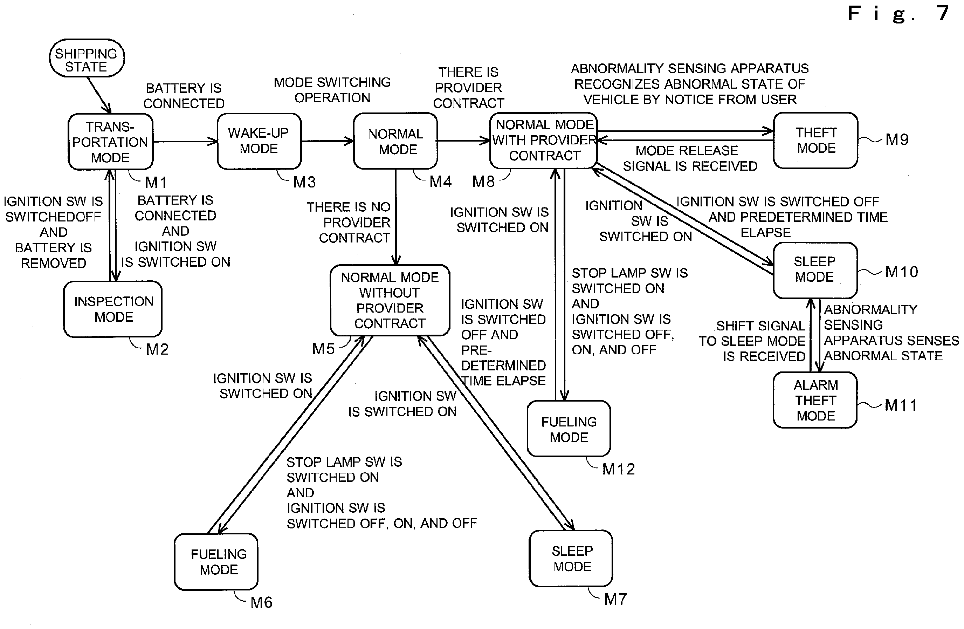

Fig. 7 is a state transition diagram showing the configuration of operational mode switching control according to the present embodiment. A shipping state denotes a state in which the in-vehicle battery 63 is not yet connected to a vehicle completed in a factory. The in-vehicle battery 63 is connected to the vehicle typically after the vehicle arrives at a sales shop, for example, at the time of delivering the vehicle to a user. In this shipping state, the operational mode of the abnormality sensing apparatus 10 is in a transportation mode M1 as the second operational mode. In the transportation mode M1, there is no need to enable the abnormality sensing function. Therefore, the apparatus is set such that the internal power supply 66 in a fully-charged state is prohibited from being used to reduce consumption of the internal power supply 66 until the in-vehicle battery 63 is connected to the vehicle.

Next, when the in-vehicle battery 63 is connected to the vehicle, the operational mode is shifted to a wake-up mode M3 in which an operation of switching to a normal mode M4 is received. On the other hand, when the in-vehicle battery 63 is connected to the vehicle and the ignition SW (switch) 60 is switched on, the operational mode is shifted to an inspection mode M2. The inspection mode M2 is set for carrying out an inspection for the abnormality sensing apparatus 10 in a factory, a sales shop, or the like. Accordingly, in an inspection for a completed vehicle in a factory, the in-vehicle battery is once connected to the vehicle to switch to the inspection mode M2, and the inspection for the system is carried out, and after the mode is switched to the transportation mode M1 after the inspection, the in-vehicle battery is detached from the vehicle to make shipment to a sales shop. Thereby, it is possible to carry out an inspection for the system once the battery is connected to the vehicle, and the system is not improperly activated when the battery is removed. Therefore, the in-vehicle battery can be removed, which does not allow the in-vehicle battery to be discharged until the vehicle is consigned to a customer, and in addition, the internal power supply is not consumed. An inspection for the abnormality sensing apparatus 10 may be carried out by checking whether or not the indicating means (LED) 13 is turned on as expected, for example, when the check coupler 90 is connected thereto. In addition, when the ignition SW 60 is switched off and the in-vehicle battery 63 is removed in the inspection mode M2, the operational mode is returned to the transportation mode M1.

Then, when a predetermined operational mode switching operation is performed in the wake-up mode M3, the operational mode is shifted to the normal mode M4 in which a case in normal use by a user is envisioned. The normal mode M4 is set so as to activate the acceleration sensor 30, and the inclination sensor 31, but to prohibit the warning means 40 from being activated on the basis of output signals from the sensors 30, 31. Thereby, it is possible to use output signals from the acceleration sensor 30, and the inclination sensor 31, and the like for fuel injection control or ignition control without activating the warning means 40 during driving the vehicle. The details of the operational mode switching operation at the time of shifting from the wake-up mode M3 to the normal mode M4 will be described later.

When the operational mode is shifted to the normal mode M4, the abnormality sensing apparatus 10 checks whether or not a user has concluded a communications contract with the predetermined provider 4. Then, when a communications contract is concluded, the operational mode is shifted to a normal mode M8 with a provider contract. On the other hand, when a communications contract is not concluded, the operational mode is shifted to a normal mode M5 without a provider contract.

When the ignition SW 60 of the vehicle is switched off and a predetermined time (for example, one minute) elapses in the normal mode M8 with a provider contract, the operational mode is shifted to a sleep mode M10. When external force such as vibrations are applied to the vehicle body to sense an abnormal state in the sleep mode M10, the operational mode is shifted to an alarm theft mode M11. In the alarm theft mode M11, the case where the vehicle is brought into an abnormal state in a state in which the ignition key is pulled out of the vehicle body is envisioned. In this case, the abnormality sensing apparatus 10 activates the warning means 40 and is capable of giving notice of the vehicle being in an abnormal state to a predetermined contact or destination such as a mobile telephone, a personal computer, or the like of a user.

Further, in the case where the operational mode is shifted to the alarm theft mode M11 due to a user's unintended movement to swing or rock the vehicle in the sleep mode M10, it is possible return the operational mode to the sleep mode M10 by, for example, transmitting a sleep mode shift signal to the abnormality sensing apparatus 10 by use of the telephone set 3 of the user. In addition, when the ignition SW 60 is switched on in the sleep mode M10, the operational mode is returned to the normal mode M8 with a provider contract.

On the other hand, in fueling, the vehicle is in a state in which the ignition SW 60 is switched off, and also a user may swing or rock the vehicle body. Therefore, the apparatus is set such that when an operation of switching off, on, and off the ignition SW 60 is performed while the stop lamp SW 61 is made to stay on by operating the brake lever in the normal mode M8 with a provider contract, the operational mode is shifted to a fueling mode M12 in which the warning means 40 is not activated even when the sensors sense external force such as vibrations or the like. In addition, when the ignition SW 60 is switched on in the fueling mode M12, the operational mode is returned to the normal mode M8 with a provider contract.

Further, the vehicle may be brought into an abnormal state in a state in which the ignition key is inserted into a key-hole of the vehicle, i.e., in a state in which it is possible for a third person to switch on the ignition SW 60. At this time, even when the vehicle is actually in an abnormal state, the abnormality sensing apparatus 10 does not activate the warning means 40 because a normal operation using the ignition key is performed. However, in a case where a provider contract is concluded, for example, it is possible for a user noticing an abnormality to make a telephone call from the telephone set 3 to the abnormality sensing apparatus 10 to cause the abnormality sensing apparatus 10 to recognize that the vehicle is in an abnormal state.

Thereby, the abnormality sensing apparatus 10 is capable of activating the warning means 40 or stopping the fuel injector even while the vehicle in an abnormal state is driving. Moreover, it is possible to know an actual location of the vehicle by use of the function of the aforementioned GPS. In addition, when a user transmits a theft mode release signal through the telephone set 3 in a theft mode M9, the operational mode is returned to the normal mode M8 with a provider contract.

In the above description, the operations when a provider contract has been already concluded has been described. To the contrary, in a case where a provider contract is not concluded, it is impossible to utilize a remote operation for the abnormality sensing apparatus 10 by making a telephone call to the in-vehicle telephone set 11, or a location finding function of the GPS. When the ignition SW 60 is switched off and a predetermined time (for example, one minute) elapses in the normal mode M5 without a provider contract, the operational mode is shifted to a sleep mode M7. When external force such as vibrations are applied to the vehicle body to sense an abnormal state in the sleep mode M7, only the warning means 40 is activated. In addition, when the ignition SW 60 is switched on in the sleep mode M7, the operational mode is returned to the normal mode M5 without a provider contract.

Further, when the stop lamp SW 61 is switched on by operating the brake lever or the like, and an operation of switching off, on, and off the ignition SW 60 is performed in the normal mode M5 without a provider contract, the operational mode is shifted to the fueling mode M6 in which the warning means 40 is not activated even when the various types of sensors sense vibrations or the like. When the ignition SW 60 is switched on in the fueling mode M6, the operational mode is returned to the normal mode M5 without a provider contract.

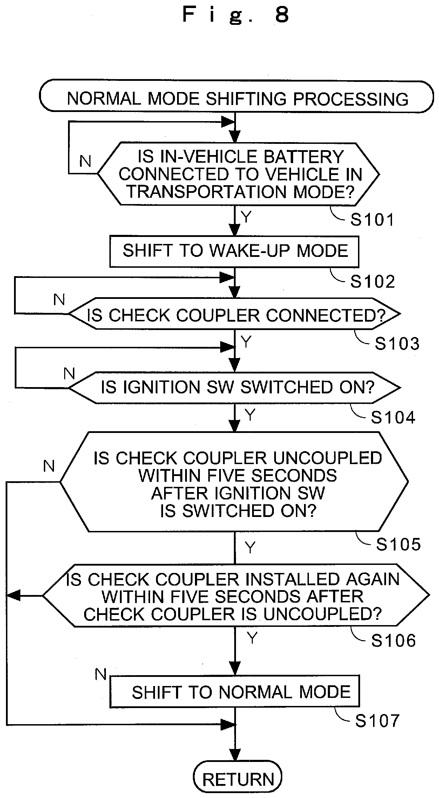

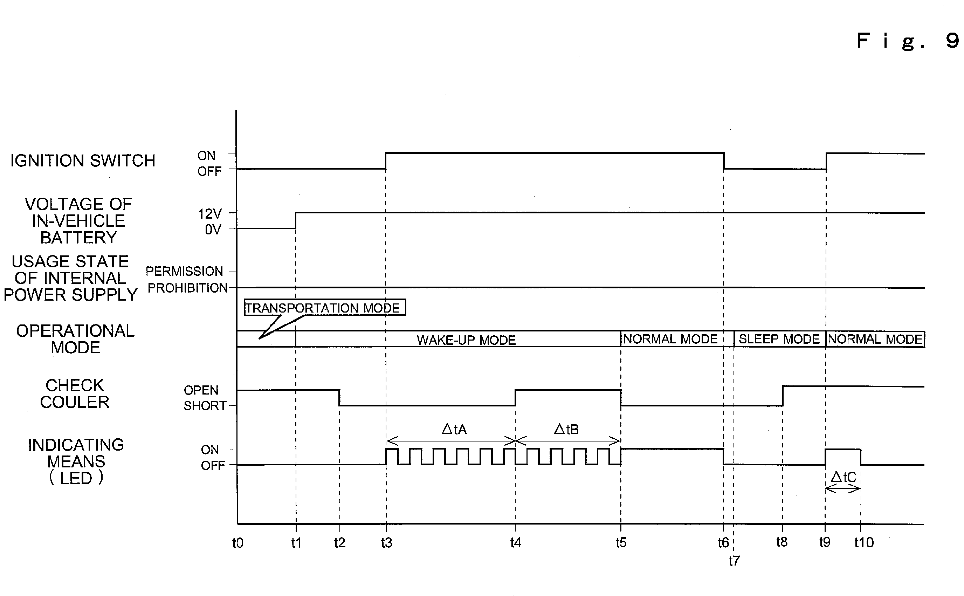

The procedure for shifting from the transportation mode M1 to the normal mode M4 will be described below with reference to a flowchart of Fig. 8 and a time chart of Fig. 9. With reference to Fig. 8, in step S101, it is determined whether or not the in-vehicle battery 63 is connected to the vehicle in the transportation mode M1. When it is determined to be positive in step S101, the procedure proceeds to step S102, and the operational mode is shifted to the wake-up mode M3. When it is determined to be negative, the determination in step S101 is repeated until it is determined to be positive.

In the following step S103, it is determined whether or not the check coupler 90 is connected. When it is determined to be positive in step S103, the procedure proceeds to step S104, and it is determined whether or not the ignition SW 60 is switched on. When it is determined to be positive in step S104, the procedure proceeds to step S105. On the other hand, when it is determined to be negative in steps S103 and S104, respective steps is repeated until each step is determined to be positive.

In step S105, it is determined whether or not the check coupler 90 is uncoupled within a predetermined time period (e.g. five seconds) after the ignition SW 60 is switched on. When it is determined to be positive in step S105, the procedure proceeds to step S106, and it is determined whether or not the check coupler 90 is installed again within a predetermined time period (e.g. five seconds) after the check coupler 90 is uncoupled. Then, when it is determined to be positive in step S106, the procedure proceeds to step S107, and the operational mode is shifted to the normal mode M4, that terminates a series of processings. In addition, when it is determined to be negative in steps S105 and S106, it is considered that the respective switching operations are not properly performed, and a series of processings are terminated while staying in the wake-up mode M3.

In accordance with the normal mode shifting processing as described above, it is possible to make it difficult to shift from the transportation mode M1 to the normal mode M4 unless a person (for example, a salesperson in a sales shop) knows the predetermined proper procedure for the operational mode switching operation.

Next, the procedure for shifting from the transportation mode M1 to the normal mode M4 will be described again with reference to Fig. 9. From the top in this time chart, the on and off state of the ignition SW 60, the voltage value of the in-vehicle battery 63, the usage state of the internal power supply 66, the operational mode of the abnormality sensing apparatus 10, the connecting state of the check coupler 90 (Open: separated, Short: connected), and the lighting state of the indicating means (LED) 13 are shown.

The operational mode of the abnormality sensing apparatus 10 is in the transportation mode M1 before factory shipment until the in-vehicle battery 63 is connected to the vehicle at clock time t1. As mentioned above, the transportation mode M1 is a mode in which the internal power supply 66 is not used even when the in-vehicle battery 63 is unconnected, so as to prevent consumption of the internal power supply 66.

When the in-vehicle battery 63 is connected at clock time t1, the operational mode is shifted to the wake-up mode M3. Next, when the check coupler 90 is connected at clock time t2, and the ignition SW 60 is further switched on at clock time t3, the indicating means 13 start flashing. This flashing may be set to repeat on and off every 0.5 seconds, for example.

Then, when the check coupler 90 is separated at clock time t4 after a predetermined time ΔtA (within five seconds in the present embodiment) from clock time t3, and when the check coupler 90 is connected again at a clock time t5 after a predetermined time ΔtB (within five seconds in the present embodiment) from clock time t4, the operational mode is shifted to the normal mode M4.

Because the indicating means 13 is brought into a continuous lighting state from time clock t5, notice of the completion of shifting to the normal mode M4 is given to a worker. The indicating means 13 in the continuous lighting state is turned off by switching off the ignition SW 60 at clock time t6. Finally, the check coupler 90 is uncoupled at clock time t8, that terminates a series of works.

In addition, once an operational mode switching operation from the wake-up mode M3 to the normal mode M4 is performed, the operational mode is no longer shifted to the wake-up mode M3 and the transportation mode M1. For example, the apparatus is set such that, when the in-vehicle battery 63 is removed in the sleep mode M10, it is judged that the battery is removed by a third person to shift the operational mode to the alarm theft mode M11.

In addition, when the ignition SW 60 is switched off at clock time t6 and a predetermined time elapses to reach clock time t7, the operational mode is shifted to the sleep mode M10. Then, when the ignition SW 60 is switched on (clock time t9) in the sleep mode M10, the operational mode is returned from the sleep mode M10 to the normal mode M4 (the normal mode M8 with a provider contract when a provider contract has been already concluded). In addition thereto, the apparatus is configured such that the indicating means 13 lights only during a predetermined time ΔtC up to clock time t10 in order to give notice of the normal completion of shifting the operational mode.

As described above, in accordance with the abnormality sensing apparatus according to the present invention, because the transportation mode in which the internal power supply of the abnormality sensing apparatus is brought into an unused state even in a state in which the in-vehicle battery is unconnected, is included in the plurality of operational modes provided to the abnormality sensing apparatus, provided that the transportation mode is set before factory shipment, it is possible to prevent the internal power supply from being unnecessarily consumed during a period until the in-vehicle battery is connected to the vehicle after shipment.

In addition, the configuration and layout of the abnormality sensing apparatus, the kinds of the various types of sensors sensing an abnormal state and the warning means, the configuration of the indicating means, the function of the communication control unit, the type of communication standard of the in-vehicle telephone set, the method of using the GPS, the lighting pattern of the indicating means, the procedure for switching operation from the wake-up mode to the normal mode, and the like are not limited to those in the above-described embodiment, and various modifications thereof are possible. The abnormality sensing apparatus according to the present invention is applicable to, not only a motorcycle, but also three-wheeled vehicles, four-wheeled vehicles, and the like.

### Reference Signs List

1: MOTORCYCLE (VEHICLE),
2: PUBLIC TELEPHONE STATION,
3: TELEPHONE SET,
4: NETWORK SERVICE PROVIDER,
10: ABNORMALITY SENSING APPARATUS (ABNORMALITY SENSING AND VEHICLE TRACKING APPARATUS),
11: IN-VEHICLE TELEPHONE SET,
12: COMMUNICATION CONTROL UNIT,
13: INDICATING MEANS,
14: FAILURE DIAGNOSING MEANS,
15: ABNORMAL STATE DETERMINING MEANS,
16: TRANSMITTING AND RECEIVING ANTENNA,
17: OPERATIONAL MODE SWITCHING MEANS,
20: GPS (GLOBAL POSITING SYSTEM),
21: EFI (ELECTRONICALLY-CONTROLLED FUEL INJECTOR),
30: ACCELERATION SENSOR,
31: INCLINATION SENSOR,
32: VOLTAGE SENSOR,
40: WARNING MEANS,
60: IGNITION SWITCH,
61: STOP LAMP SWITCH,
63: IN-VEHICLE BATTERY,
66: INTERNAL POWER SUPPLY,
90: CHECK COUPLER,
M1: TRANSPORTATION MODE (SECOND OPERATIONAL MODE),
M2: INSPECTION MODE (THIRD OPERATIONAL MODE),
M3: WAKE-UP MODE,
M4: NORMAL MODE (FIRST OPERATIONAL MODE),
M5: NORMAL MODE WITHOUT PROVIDER CONTACT,
M6, M12: FUELING MODE,
M7, M10: SLEEP MODE,
M8: NORMAL MODE WITH PROVIDER CONTACT,
M9: THEFT MODE,
M11: ALARM THEFT MODE

## Claims

1. An abnormality sensing and vehicle tracking apparatus (10) which senses an abnormal state of the vehicle with abnormality sensing means (15) including a sensor sensing vibrations or the like applied to a vehicle (1), and which has a vehicle tracking function, the apparatus comprising:
an internal power supply (66) which is capable of supplying driving electrical power to the abnormality sensing and vehicle tracking apparatus (10) in place of an in-vehicle battery(63) when the in-vehicle battery (63) is unconnected to the vehicle (1); and
operational mode switching means (17) for switching a plurality of operational modes provided to the abnormality sensing and vehicle tracking apparatus (10), wherein
the plurality of operational modes include a first operational mode (normal mode M4) in which the abnormality sensing and vehicle tracking apparatus (10) is activated by use of the internal power supply (66), and a second operational mode (transportation mode M1) in which the internal power supply (66) is prohibited from being used when the in-vehicle battery (63) is removed;
wherein among the plurality of operational modes, only the second operational mode (M1) is set in an initial state before the in-vehicle battery (63) is first connected to the vehicle, and the second operational mode (M1) is allowed to be switched to the first operational mode (M4) for the first time when the in-vehicle battery (63) is connected to the vehicle.

2. The abnormality sensing and vehicle tracking apparatus according to claim 1 wherein, when the in-vehicle battery (63) is connected to the vehicle and a predetermined operational mode switching operation is executed in the second operational mode (M1) as an operational mode among the plurality of operational modes, the operational mode is shifted to a third operational mode (inspection mode M2) in which an inspection for the abnormality sensing and vehicle tracking apparatus (10) is possible.

3. The abnormality sensing and vehicle tracking apparatus according to claim 1 wherein an operational mode switching operation from the second operational mode (M1) to the first operational mode (M4) is composed of a combination of an operation of an ignition switch (60) that switches on and off a main power supply of the vehicle (1) and a connecting operation of a check coupler (90).

4. The abnormality sensing and vehicle tracking apparatus according to claim 2 wherein the predetermined operational mode switching operation switches on the ignition switch (60) that switches on and off the main power supply of the vehicle (1).

5. The abnormality sensing and vehicle tracking apparatus according to claim 4 wherein when the ignition switch (60) is switched off and the in-vehicle battery (63) is brought into an unconnected state in the third operational mode (inspection mode M2), the operational mode switching means (17) shifts the operational mode to the second operational mode (transportation mode M1).

## Patentansprüche

1. Annormalitätsmess- und Fahrzeugnachverfolgungsvorrichtung (10), die einen annormalen Zustand des Fahrzeugs mit Annormalitätsmessmitteln (15) misst, die einen Sensor aufweisen, der Vibrationen oder Ähnliches, die auf ein Fahrzeug (1) aufgebracht werden, misst, und die eine Fahrzeugnachverfolgungsfunktion aufweist, wobei die Vorrichtung aufweist:
eine Eigenspeisung (66), die anstelle einer Batterie (63) im Fahrzeug geeignet ist zum Versorgen der Annormalitätsmess- und Fahrzeugnachverfolgungsvorrichtung (10) mit einer antreibenden elektrischen Leistung, wenn die Batterie (63) im Fahrzeug nicht mit dem Fahrzeug (1) verbunden ist;
Betriebsbereiter-Modus-Umschaltmittel (17) zum Umschalten mehrerer betriebsbereiter Modi, die in der Annormalitätmess- und Fahrzeugnachverfolgungsvorrichtung (10) vorgesehen sind, bei der
die mehreren betriebsbereiten Modi einen ersten betriebsbereiten Modus (Normalmodus M4), bei dem die Annormalitätsmess- und Fahrzeugnachverfolgungsvorrichtung (10) durch Verwenden der Eigenspeisung (66) aktiviert ist, und einen zweiten betriebsbereiten Modus (Transportmodus M1) aufweist, bei dem die Eigenspeisung (66) daran gehindert wird, verwendet zu werden, wenn die Batterie (63) im Fahrzeug entfernt ist;
bei der unter den mehreren betriebsbereiten Modi nur der zweite betriebsbereite Modus (M1) in einem Anfangszustand, bevor die Batterie (63) im Fahrzeug erstmalig mit dem Fahrzeug verbunden wird, festgelegt wird und es dem zweiten betriebsbereiten Modus (M1) ermöglicht wird, zum ersten Mal in den ersten betriebsbereiten Modus (M4) umgeschaltet zu werden, wenn die Batterie (63) im Fahrzeug mit dem Fahrzeug verbunden ist.

2. Annormalitätsmess- und Fahrzeugnachverfolgungsvorrichtung nach Anspruch 1, bei der, wenn die Batterie (63) im Fahrzeug mit dem Fahrzeug verbunden ist und ein vorgegebener Betriebsbereiter-Modus-Umschaltvorgang in dem zweiten betriebsbereiten Modus (M1) als ein betriebsbereiter Modus unter den mehreren betriebsbereiten Modi ausgeführt wird, der betriebsbereite Modus in einen dritten betriebsbereiten Modus (Inspektionsmodus M2) umgeschaltet wird, bei dem eine Inspektion für die Annormalitätsmess- und Fahrzeugnachverfolgungsvorrichtung (10) möglich ist.

3. Annormalitätsmess- und Fahrzeugnachverfolgungsvorrichtung nach Anspruch 1, bei der ein Betriebsbereiter-Modus-Umschaltvorgang von dem zweiten betriebsbereiten Modus (M1) in den ersten betriebsbereiten Modus (M4) aus einer Kombination einer Betätigung eines Zündschalters (60), der eine Hauptleistungsversorgung des Fahrzeugs (1) an- und ausschaltet, und einer Verbindungsbetätigung eines Prüfverbinders (90) zusammengesetzt ist.

4. Annormalitätsmess- und Fahrzeugnachverfolgungsvorrichtung nach Anspruch 2, bei der der vorgegebene Betriebsbereiter-Modus-Umschaltvorgang den Zündschalter (60), der die Hauptleistungsversorgung des Fahrzeugs (1) an- und ausschaltet, anschaltet.

5. Annormalitätsmess- und Fahrzeugnachverfolgungsvorrichtung nach Anspruch 4, bei der, wenn der Zündschalter (60) ausgeschaltet ist und die Batterien (63) im Fahrzeug in dem dritten betriebsbereiten Modus (Inspektionsmodus M2) in einen nichtverbundenen Zustand gebracht ist, das Betriebsbereiter-Modus-Umschaltmittel (17) den betriebsbereiten Modus in den zweiten betriebsbereiten Modus (Transportmodus M1) umschaltet.

## Revendications

1. Appareil de détection d'anomalies et de suivi de véhicule (10) qui détecte un état anormal du véhicule avec un moyen de détection d'anomalies (15) comprenant un capteur détectant des vibrations ou similaire appliqué à un véhicule (1), et qui a une fonction de suivi de véhicule, l'appareil comprenant :
une alimentation électrique interne (66) qui est capable de fournir de la puissance électrique de commande à l'appareil de détection d'anomalies et de suivi de véhicule (10) à la place d'une batterie embarquée dans le véhicule (63) quand la véhicule embarquée dans le véhicule (63) n'est pas connectée au véhicule (1) ; et
un moyen de commutation de mode de fonctionnement (17) pour commuter une pluralité de modes de fonctionnement fournis à l'appareil de détection d'anomalies et de suivi de véhicule (10), dans lequel
la pluralité de modes de fonctionnement incluent un premier mode de fonctionnement (mode normal M4) dans lequel l'appareil de détection d'anomalies et de suivi de véhicule (10) est activé par l'utilisation de l'alimentation électrique interne (66), et un second mode de fonctionnement (mode de transport M1) dans lequel il est interdit d'utiliser l'alimentation électrique interne (66) quand la batterie embarquée dans le véhicule (63) est retirée ;
dans lequel, parmi la pluralité de modes de fonctionnement, seul le second mode de fonctionnement (M1) est établi dans un état initial avant que la batterie embarquée dans le véhicule (63) ne soit d'abord connectée au véhicule, et le second mode de fonctionnement (M1) est autorisé à être commuté sur le premier mode de fonctionnement (M4) pour la première fois quand la batterie embarquée dans le véhicule (63) est connectée au véhicule.

2. Appareil de détection d'anomalies et de suivi de véhicule selon la revendication 1 dans lequel, quand la batterie embarquée dans le véhicule (63) est connectée au véhicule et qu'une opération de commutation de mode de fonctionnement prédéterminée est exécutée dans le second mode de fonctionnement (M1) comme mode de fonctionnement parmi la pluralité de modes de fonctionnement, le mode de fonctionnement est déplacé sur un troisième mode de fonctionnement (mode d'inspection M2) dans lequel une inspection pour l'appareil de détection d'anomalies et de suivi de véhicule (10) est possible.

3. Appareil de détection d'anomalies et de suivi de véhicule selon la revendication 1 dans lequel une opération de commutation de mode de fonctionnement du deuxième mode de fonctionnement (M1) vers le premier mode de fonctionnement (M4) se compose d'une combinaison d'une opération d'un commutateur d'allumage (60) qui active et désactive une alimentation électrique principale du véhicule (1) et d'une opération de connexion d'un coupleur de vérification (90).

4. Appareil de détection d'anomalies et de suivi de véhicule selon la revendication 2 dans lequel l'opération de commutation de mode de fonctionnement prédéterminée active un commutateur d'allumage (60) qui active et désactive l'alimentation électrique principale du véhicule (1).

5. Appareil de détection d'anomalies et de suivi de véhicule selon la revendication 4 dans lequel, quand le commutateur d'allumage (60) est désactivé et que la batterie embarquée dans le véhicule (63) est amenée dans un état déconnecté dans le troisième mode de fonctionnement (mode d'inspection M2), le moyen de commutation de mode de fonctionnement (17) déplace le mode de fonctionnement sur le second mode de fonctionnement (mode de transport M1).
